# EUROPEAN PATENT SPECIFICATION

(11) **EP 3 241 437 B1**
(45) Date of publication and mention of the grant of the patent: **05.12.2018**
(21) Application number: 17000298.4
(22) Date of filing: 24.02.2017
(51) Int. Cl.: A01N 25/00, A01N 57/10, A01N 43/16, A01N 57/12

(54) **METHOD FOR FRUITLET THINNING OF APPLE TREES**
VERFAHREN ZUR FRUCHTAUSDÜNNUNG VON APFELBÄUMEN
PROCÉDÉ D'ECLAICISSAGE DE FRUITS D'ARBRES DE POMMES

(30) Priority: 05.05.2016 SI 201600124
(43) Date of publication of application: 08.11.2017
(73) Proprietor: Kmetijski Institut Slovenije, 1000 Ljubljana (SI)
(72) Inventor: Stopar, Matej, 1000 Ljubljana (SI)
(74) Representative: Macek, Gregor

(56) References cited:
- WO-A1-01/54497
- WO-A1-96/26997
- WO-A1-03/020034
- WO-A1-2017/013491
- WO-A2-02/07767
- WO-A2-03/020024
- JP-A- S5 513 233
- US-A1- 2011 318 406

## Description

### Field of the invention

The present invention relates to horticultural methods for late fruitlet thinning of apple trees. A composition which comprises a mixture of lecithin or polysorbates as active ingredients, alone or in combination, with water is used in the method for application on apple trees after the blooming period.

### Background of the invention

The practice of fruit thinning is a standard technological procedure for the deciduous orchard plantations in fruit industry. Thinning is the removal of flowers or small fruits (fruitlets) before they mature on the tree. Flower or fruitlet thinning in the orchard is necessary because fruit trees mostly set too many flowers/fruits and the result is over cropping with a lot of small, poor colored, non-marketable fruits (Link, 2000). Also the excessive fruit set on early in the season prevent good flower bud formation and leading to poor flowering in the next season (Wertheim, 1997). So called alternate bearing phenomenon is well known for apples, pears, plums, olive, citrus and others. The low fruit quality and the prevention of flower bud formation for the next year can be expected on too heavy flower/fruit setting apple trees (Monselise and Goldschmidt 1982; Dennis, 2000). This pattern can be disrupted, and constant desirably-sized crops can be obtained on a regular basis by proper thinning techniques. Apples are a very good example of alternate bearing fruit species which respond favorably to appropriate thinning.
Thinning of apple can be obtained in a chemical or in a physical way, i. e. by hand or by mechanical rotating machine. Hand thinning is time consuming, expensive and is done in addition to improve the prior applied chemical thinning. After the June drop period when the fruitlets are bigger workers must go to each tree and remove sufficient fruit to provide satisfactory fruit thinning. String blossom thinning machine connected to the tractor was developed and used in the last years but the following disadvantages of mechanical thinner can be expected: narrow time window from balloon stage to the end of bloom phenophases is available to do the operation; non-selective removing of the flowers from the external part of the crown i.e. the flowers which are expected to give the best final fruit quality at harvest; possibility of not sufficient thinning; possibility of over-thinning; and increasing the risk of spreading bacterial disease *Erwinia amylovora* (Schupp et al., 2008; Ngugi and Schupp, 2009).

The main purpose of widely practiced chemical thinning are reduction of labor costs, enhancing the fruit size, color and ensuring the return bloom for the next season. Two types of chemical thinning agents are currently used and tested for tree fruit production. The first type are so called flower (blossom) thinners, the caustic compounds which burns stigmas and styles of opened flowers and thus prevent fertilization and seed formation (Dennis, 2000). They are applied during flowering period, from the balloon stage to the end of blooming period. Such mostly used blossom thinners are lime sulphur, ammonium thiosulfate (ATS), pelargonic acid, endothalic acid or sulfcarbamide (Fallahi and Greene, 2010; Wertheim, 1997). Environmental concerns and legislation restrictions in the last years pushed researchers to find new flower thinning compounds, capable to thin the fruit in more sustainable way and can be registered as natural, non-toxic product for humans and not harmful for the environment. Many patents were granted in the past to thin the flowers of fruit trees, all of them to be applied in period from the start of blooming to the end of bloom phenophases: a composition and method for early bloom thinning with glyceride type of lipids (PCT/US01/02168), flower thinning with phospholipids (JP55013233(A)-1980-01-30); flower thinning with cholesterol (US Pat. No. 4,789,398); the inhibition of flower fertilization with porous powder containing zeolite, montmorillonite, diatomite and silica gel (JP4064280(B2)-2008-03-19); flower thinning with inorganic compounds as calcium or magnesium carbonate, zeolite, silica or magnesium phosphate mixed with an organic additives (US 7785705); flower thinners consisting of fatty acids and their derivatives (US Pat. No. 5,242,891); flower thinning by calcium chloride (US6440901); flower thinning with organosilicone emulsifier Silwet (PCT/IL00/00062); flower thinning with eugenol (US Pat. No. 7,635,663), wax esters (PCT/US2000/012608), plant sterols as cholesterol (EP 0200371 A1), and many other organic compounds with the possibility to act as caustic agent for open fruit flower organs. The problem of all the above mentioned flower (blossom) thinning agents are (i) narrow time application window to spray the whole orchard - maybe only one appropriate 'spraying' day at the time of blooming period; (ii) inconsistent results appears as inadequate thinning or over thinning - any factor affecting pollination and fertilization may affect the thinning efficacy of these blossom thinners, (iii) phytotoxicity because the caustic compounds are non-selective to plant tissues and often cause foliage or fruit injury (fruit cuticle russeting or fruit deformation) even when applied at the recommended phenophases (Fallahi, 1997; Fallahi and Willemsen 2002), and (iiii) farmers do not like to do the thinning at blooming time because of frequent spring (flower) frosts on some plantations/locations.
In patent application No. JPS55 13233 an aqueous lecithin solutions which are used as blossom thinning are disclosed. However there is no indication that lecithin solutions are used as active ingredients for late fruitlet thinning.
In WO 01/54497 a composition and method for early bloom thinning of fruit trees and controlling cracking is disclosed wherein the active ingredients are glyceride type of lipids.
The second type of chemical fruit thinning agents is post bloom (fruitlet) thinners. The majority of fruit thinning done in the world in the temperate zone apple growing regions is with fruitlet thinners. The most commonly-used fruitlet thinners are carbaryl, naphthaleneacetic acid (NAA), benzyladenine (6BA), naphthaleneacetamide (NAD) and, to a lesser extent, ethephon (Fallahi and Greene, 2010). These compounds are applied to the fruit trees when average king fruitlet diameter in the flower cluster reaches the size between 6 to 18 mm (Wertheim, 1997; Fallahi and Green, 2010). Carbaryl is insecticide and not allowed in modern environmental friendly integrated fruit production (IP) systems. Environmental concerns and high toxicity took away carbaryl registration in Europe and in many other parts of the world carbaryl is no longer available for fruit spraying-thinning management program. 6BA is an important fruitlet thinning chemical because of its effect on increasing fruit size. However, 6BA induced thinning is sensitive to physiological and weather conditions so the prediction of its thinning effect is difficult (Yuan and Greene, 2000). Post bloom thinners as NAA, NAD or ethephon sometimes depress the final fruit size at the concentration achieving adequate thinning or when applied too late after full bloom (Jones at al., 1983; Weinbaum et al., 1977) which negates one of the major desired quality outcomes of thinning. Recently two new thinning agents, 1-aminocyclopropane carboxylic acid (ACC) and abscisic acid (ABA) were patented and registered as fruitlet thinning agents (US 2010/0317529 A1 and PCT/US2008/001181). Both, ACC and ABA are capable to thin pome and stone fruits at later fruitlet state development, i.e. up to 20 mm king fruit diameter. As other fruitlet thinners they are hormonal-type growth regulators, they interfere with normal metabolism of fruit and their action is dependent on physiological and weather conditions at the time of application. Biotic factors (phenology, pollination, position of fruitlet on the branch or on the crown) and abiotic (temperature, light, humidity) factors have strong effect on hormonal-type thinning agent application success and could lead to under or over thinning of fruitlets (Williams, 1994; Marini, 2002). Metamitron is also one of recently patented fruitlet thinning chemical (PCT/EPO2/09330). Metamitron is the photosynthesis inhibiting active substance and was first developed as herbicide but later on it was found out that lower concentrations of this substance gave a successful fruit thinning result. Thinning action of metamitron is temperature dependent and can induce some fruit russeting or smaller foliar necrosis at higher application rates. The commercial use of all three new thinning agents is quite expensive comparing to older, standard fruitlet thinning agents.

The use of metamitron among other cited compositions is also disclosed in WO2017/013491 wherein methods of fruit thining fruit bearing plants using photosynthesis inhibiting fruit thining agents are disclosed.

**CITED PATENT DOCUMENTS**

| **Cited patent/ Application number** | **Day of priority/ Filed** | **Day of publicatio n** | **Inventors/ applicants/ representative** | **Title of patent** |
|---|---|---|---|---|
| PCT/US01/02168 | 27.01.2000 | 23.01.2001 | Duan Yousheng et al., Ju, Zhiguo | Composition and method for early bloom thinning of fruit trees and controlling cracking of fruits |
| JP55013233 | 17.07.1978 | 30.01.1980 | Yamazaki Toshihiko et al., Nourisuisanshiyo u Kayiyu Shik | Agent for dropping flower of fruit tree |
| US Pat. No. 4,789,398 | 25.05.1986 | 06.12.1988 | Toshihiko Yamazaki et al. | Flower-thinning agents for fruit trees |
| JP4064280 | | 19.03.2008 | Yamada Yasushi, Yamada Takushi | Fruit tree thinning agent and thinning method |
| US7785705 | 01.08.2003 | 31.08.2010 | Hisakazu Hojo et al., | Flower thinning agent |
| | | | Maruo Calcium Co. | |
| US pat. No. 5,242,891 | 01.05.1992 | 07.09.1993 | Thomas E. Larsen et al. | Methods for fruit thinning comprising applying fatty acids or derivatives thereof to flowers |
| US6440901 | | 27.08.2002 | Long Gary S. | Calcium chloride fruit blossom thinning agent |
| PCT/IL00/00062 | 30.01.2000 | 03.08.2000 | David Rosenberg et al. Agan Chemical Manufacturers | A method to thin flowers and fruit |
| US Pat. No. 7,635,663 | 10.05.2007 | 22.12.2009 | Thomas Tworkoski, Stephen Miller | Methods for thinning fruit blossoms using eugenol |
| PCT/US2000/ 012608 | 09.05.2000 | 30.11.2000 | Hicks Scott, Siemer Sidney, Barioni Donald, Peterson John | A method of inhibiting fruit set on fruit producing plants using an aqueus emulsion of eicosenyl eicosenoate and docosenyl eicosenoate |
| EP0200371 | 02.04.1985 | 05.11.1986 | Yamazaki Toshihiko, Murase Shoji Tatsurou Motohashi | Flower-thinning agent for fruit trees and method of thinning flowers |
| US 2010/0317529 | 11.06.2010 | 16.12.2010 | F. P. Silverman et al. | 1-aminocyclopropane carboxylic acid as a fruit thinner |
| PCT/US2008/ 001181 | 31.01.2007 | 07.08.2008 | D.D. Woolard et al. | Use of abscisic acid combinations for thinning |
| PCT/EP02/09330 | 03.09.2001 | 02.12.2004 | Peter Baur et al., Bayer Cropscience | Method for thinning fruit |

### OTHER PUBLICATIONS

Dennis F.G. 2000. The history of fruit thinning. Plant Growth Regulation 31: 1-16.
Fallahi, E. 1997. Applications of endothalic acid, pelargonic acid, and hydrogen cyanamide for blossom thinning in apple and peach. HortTechnology 7: 395-399.
Fallahi, E., Willemsen, K.M. 2002. Blossom thinning of pome and stone fruit. HortScience 37: 474-477.
Fallahi, E., Greene D.W. 2010. The impact of blossom and postbloom thinners on fruit set and fruit quality in apples and stone fruits. Acta Horticulturae 884: 179-187.
Jones, K.M., Koen, T.B., Longley, Meredith, R.J. 1983. Thinning 'Golden Delicious' apples using ethephon sprays. J. Hort. Sci. 63: 27-30.
Link, H. 2000. Significance of flower and fruit thinning on fruit quality. Plant Growth Regulation 31: 17-26.
Marini, R.P., 2002. Experience with thinning: what factors contribute to contradicting results? Hortscience 37 (3): 484-487.
Monselise, S.P., Goldschmidt, E.E. 1982. Alternate bearing in fruit trees. In: Horticultural reviews, 4: 128-175. DOI:10.1002/9781118060773.ch5
Ngugi, H.K., Schupp, J.R. 2009. Evaluation of the risk of spreading fire blight in apple orchards with a mechanical string blossom thinner. Hortscience 44(3): 862-865.
Schupp, J.R., Baugher, T.A., Miller, S.S., Harsh, R.M., Lesser, K.M. 2008. Mechanical thinning of peach and apple trees reduces labor input and increases fruit size. Horttechnology 18(4): 660-670.
Yuan, and Greene, D.W. 2000. Benzyladenine as a chemical thinner for'McIntosh apples.II. Effect of benzyladenine, bourse shoot tip removal, and leaf number on fruit retention. J. Amer. Soc. Hort. Sci. 125: 169-176.
Weinbaum, S.A., Giulivo, C., Ramina, A. 1977. Chemical thinning, ethylene and pretreatment fruit size influence enlargement, auxin transport and apparent sink strength of French prune and 'Andros' peach. J. Amer. Soc. Hort. Sci. 102: 781-785.
Wertheim, S.J. 1997. Chemical thinning of deciduous fruit trees. Acta Horticulturae 463: 445-462.
Williams, M.W. 1994. Factors influence chemical thinning and update on new chemical thinning agent. Compact fruit tree 27, 115-122.

### Summary of the invention

The invention is defined by the independent claim. Any information falling outside the scope of the claims is for explanatory only.

It is an object of this invention to propose a method to reduce fruit set of fruit trees, preferably apple trees, wherein the mixture of lecithin or polysorbates or combinations thereof with water acts as fruitlet thinning agent when applied to fruit tree crown after the blooming period. The mixture of above mentioned active ingredients, i.e lecithin and polysorbates, alone or in combination, with water is sprayed to the trees at a late fruitlet stage from 6 to 30 mm king fruit diameter, preferably from 8 to 22 mm fruitlet diameter.

The present invention concerns a method according to claim 1. The dependant claims relate to advantageous features of the invention.
The active ingredients - surfactants (emulsifiers) used in this invention are not pesticides and can be used in organic food production because of their low toxicity. Lecithin is the natural surfactant and emulsifier commonly used in human diet and is classified as GRAS (generally recognized as safe) substance. Polysorbates are a class of surfactants used in some pharmaceuticals and in food preparations as emulsifiers. They could be used as food additives because of their relative nontoxicity. Acceptable daily intake (ADI) rate for them is the same as for the kitchen salt. Because of the low toxicity of the lecithin and polysorbates they could be registered for organic or integrated fruit production, or even do no need the registration such as pesticide-growth regulator do.
According to this invention polysorbates are surfactants from Tween family: polysorbate 20 (polyoxyethylene (20) sorbitan monolaurate), or polysorbate 60 (polyoxyethylene (20) sorbitan monostearate), or polysorbate 80 (polyoxyethylene (20) sorbitan monooleate). The use of lecithin in this invention is related to substances derived from soybean, corn, or sunflower oil where the major constituents are phospholipids, triglycerides, glycolipids, fatty acids and glycerol.
The method according to the invention employs a mixture of lecithin with water or a mixture of one or several polysorbates with water or a mixture of lecithin and one or several polysorbates with water to act as fruitlet thinning agent when applied to fruit tree crown at tree phenology stage from 6 to 30 mm king fruitlet diameter, preferably from 8 to 22 mm king fruitlet diameter.
According to the method of this invention the mixture of lecithin and/or polysorbates with water forms the solution, wherein lecithin or each of polysorbates represents an individual active ingredient when mixing with water to get the solution; or the active ingredient of the solution comprises the mixture of lecithin with one or more polysorbates; or the mixture of different polysorbates without lecithin represents the active ingredient of the solution.

According to the method of this invention the amount of lecithin is from 0.2% to 5% preferably 0.5% by weight of the total solution; the amount of each polysorbate is from 0.2% to 5%, preferably 0.5% by volume of the total solution; and the amount of all active ingredients is from 0.2% to 15% by weight or volume of the total solution. The amount of water represents more than 85%, preferably 99% by volume of the total solution.

### Detail description of the invention

According to this invention inventors provide a method for late fruitlet thinning of apple trees. A composition to be used in the method comprises a mixture of lecithin and/or polysorbates (polysorbate 20, or polysorbate 60, or polysorbate 80) with water to act as fruit thinning agents. According to the method of this invention the composition comprises the mixture of lecithin and water, or one of above mentioned polysorbates with water, or lecithin plus one or more polysorbates with water, or the mixture of different polysorbates with water, wherein each ingredient is dissolved in water in the amount from 0.2% to 5% preferably 0.5% by weight (i.e. mass/volume percentage) or volume (i.e. volume/volume percentage) of the total solution.

The solution of the above mentioned thinning agents with water comprises preferably: 0.5% lecithin powder in water as % w/v, or 0.5% polysorbate in water as % v/v, or a mixture of 0.5% lecithin powder as % wt/v in water plus one or more polysorbates each by 0.5% in water as % v/v, or the mixture of polysorbates each by 0.5% in water as % v/v.

The method according to the invention comprises the application of the above mentioned thinning composition (lecithin or polysorbates) when the fruitlet in the tree crown reach the diameter from 6 to 30 mm king fruitlet, preferably from 8 to 22 mm king fruitlet diameter.

According to the method the thinning compositions are used in one or multiple applications, preferably in two applications, at the time of king fruitlet diameter from 6 to 30 mm.

According to the method the composition can be applied by any of the methods typically known and used in the agricultural industry for the application of the chemicals. Preferably, the composition is applied by a common spraying techniques used in the agricultural industry.

For the purpose of fruitlet thinning the composition is applied-to apple trees.

The term 'thinning agent', as used herein, refers to any compound that reduces fruit set when applied on fruit bearing trees.

The term 'king fruitlet', as used herein, refers to the main, centrally positioned fruitlet in the apple flower cluster.

According to the method of this invention, the solution of above mentioned thinning agents with water is preferably mixed with a small amount of water in advance, a day prior of making final water solution and application. For example to make 0.5% lecithin solution first 0.5 kg of lecithin powder is mixed with 5 liter of tap water and left at room temperature for one day to achieve appropriate dissolving. Next day the addition of 95 liter of water should be done to make the final solution prepared for application to the fruit trees.

In addition to lecithin and polysorbates, the fruit thinning composition used in the method according to the invention can also comprise, if appropriate, additives, other thinning agents, growth regulators, foliar fertilizers and other agrochemical active substances.

The amount of water used for application of the thinning composition according to the invention is from 1,000 to 2,000 liter per hectare of the orchard. It depends mainly on the size/volume of the orchard tree crowns.

The invention is further illustrated by the examples.

### Example 1:

The fruitlet thinning of Golden Delicious/M.9 apple trees by double or triple application of lecithin, polysorbate 20, polysorbate 60 and polysorbate 80: each compound is present in a water solution in the amount of 0.5% as active ingredient by weight or volume. When double application (2x) was made, trees were sprayed at 6 and 9 mm king fruit diameter. When triple application (3x) was made, trees were sprayed at 6, 9, and at 14 mm king fruitlet diameter. Table 1 shows that double application of single emulsifier which were also earlier applications, i.e. sprayed at 6 and 9 mm king fruitlet diameter, has lower impact on fruitlet thinning than triple application of single emulsifier wherein the last application was sprayed at a later stage, i.e. at 14 mm king fruitlet diameter. The stronger thinning effect of triple application of single emulsifier suggests that the application of thinning agents at a later stage, i.e. at larger king fruitlet diameter has higher impact. A mixture of two emulsifiers successfully thinned fruitlets at earlier stage too.

**Table 1:**

| The effect of lecithin, polysorbate 20, polysorbate 60 and polysorbate 80 on the final fruit retention and fruit quality at harvest, Golden Delicious 2013 | | |
|---|---|---|
| Treatment | Fruit number per tree at harvest | Average weight of fruit |
| Control (non-thinned) | 180 | 72 |
| Lecithin - 2x | 156 | 89 |
| Polysorbate 20 - 2x | 141 | 82 |
| Polysorbate 60 - 2x | 157 | 94 |
| Polysorbate 80 - 2x | 144 | 80 |
| Lecithin - 3x | 113 | 92 |
| Polysorbate 60 - 3x | 128 | 96 |
| Polysorbate 80 - 3x | 126 | 79 |
| Lecithin + polysorbate 60 - 2x | 79 | 91 |
| Lecithin + polysorbate 80 - 2x | 116 | 85 |

### Example 2:

The fruitlet thinning of Idared/M.9 apple trees by double or triple application of lecithin, polysorbate 20, polysorbate 60 and polysorbate 80: each compound is present in a water solution in the amount of 0.5% as active ingredient by weight or volume. When double application (2x) was made, trees were sprayed at 6 and 10 mm king fruitlet diameter. When triple application (3x) was made, trees were sprayed at 6, 10, and at 15 mm king fruitlet diameter. Table 2 shows that the triple application (or the lasts) of single emulsifier has stronger thinning effect than double (also earlier) application - the results suggest that the application of tested single thinning agents, i.e. emulsifiers, at a later stage has higher impact.

**Table 2:**

| The effect of lecithin, polysorbate 20, polysorbate 60 and polysorbate 80 on the final fruit retention at harvest, Idared 2013 | | |
|---|---|---|
| Treatment | Fruit number per tree at harvest | Fruit number per 100 flower clusters |
| Control (non-thinned) | 182 | 236 |
| Lecithin - 2x | 146 | 183 |
| Polysorbate 20 - 2x | 158 | 215 |
| Polysorbate 60 - 2x | 144 | 180 |
| Polysorbate 80 - 2x | 144 | 183 |
| Lecithin - 3x | 140 | 186 |
| Polysorbate 60 - 3x | 133 | 181 |
| Polysorbate 80 - 3x | 126 | 163 |
| Lecithin + polysorbate 60 - 2x | 132 | 201 |
| Lecithin + polysorbate 80 - 2x | 142 | 201 |

### Example 3:

The fruitlet thinning of Elstar/M.9 apple trees by double or triple application of lecithin, polysorbate 20, polysorbate 60 and polysorbate 80: each compound is present in a water solution in the amount of 0.5% as active ingredient by weight or volume. When double application (2x) was made, trees were sprayed at 6 and 10 mm king fruitlet diameter. When triple application (3x) was made, trees were sprayed at 6, 10, and at 14 mm king fruitlet diameter. Table 3 shows that thinning effect is weaker at earlier application time (2x), i.e. when king fruitlet diameter is smaller, but the third/later application (3x) has stronger fruit reduction.

**Table 3:**

| The effect of lecithin, polysorbate 20, polysorbate 60 and polysorbate 80 on the final fruit retention at harvest, Elstar 2014 | | |
|---|---|---|
| Treatment | Fruit number per tree at harvest | Fruit number per 100 flower clusters |
| Control (non-thinned) | 289 | 131 |
| Lecithin - 2x | 270 | 123 |
| Polysorbate 20 - 2x | 277 | 123 |
| Polysorbate 60 - 2x | 255 | 114 |
| Polysorbate 80 - 2x | 262 | 122 |
| Lecithin - 3x | 252 | 120 |
| Polysorbate 60 - 3x | 228 | 108 |
| Polysorbate 80 - 3x | 258 | 122 |

### Example 4:

The fruitlet thinning of Elstar/M.9 apple trees by double application of lecithin, polysorbate 20, polysorbate 60 and polysorbate 80: each compound is present in a water solution in the amount of 0.5% as active ingredient by weight or volume. 2x early refers to double application of a compound sprayed at 12 and 18 mm king fruitlet diameter. 2x late refers to double application of a compound sprayed at 18 and 23 mm king fruitlet diameter. Table 4 suggests that two applications of thinning agent (Polysorbate 20, 60 or 80) are effective when applied between 12 and 23 mm king fruitlet diameter. Early lecithin applications did not thin in this experiment which can be due to very poor responsiveness of Elstar apple trees to fruitlet thinning.

**Table 4:**

| The effect of lecithin, polysorbate 20, polysorbate 60 and polysorbate 80 on the final fruit retention at harvest, Elstar 2015 | | |
|---|---|---|
| Treatment | Fruit number per tree at harvest | Fruit number per 100 flower clusters |
| Control (non-thinned) | 265 | 229 |
| Lecithin - 2x early | 280 | 248 |
| Polysorbate 20 - 2x early | 203 | 169 |
| Polysorbate 60 - 2x early | 235 | 203 |
| Polysorbate 80 - 2x early | 216 | 183 |
| Lecithin - 2x late | 256 | 218 |
| Polysorbate 20 - 2x late | 239 | 198 |
| Polysorbate 60 - 2x late | 207 | 185 |
| Polysorbate 80 - 2x late | 219 | 177 |
| Lecithin + polysorbate 60 - 2x late | 234 | 200 |

### Example 5:

The fruitlet thinning of Golden delicious/M.9 apple trees by double application of lecithin, polysorbate 20, polysorbate 60 and polysorbate 80: each compound is present in a water solution in the amount of 0.5% as active ingredient by weight or volume. 2x early refers to double application of a compound sprayed at 13 and 18 mm king fruitlet diameter. 2x late refers to double application of a compound sprayed at 18 and at 20 mm king fruitlet diameter. Table 5 suggests that two applications of thinning agents is effective and enhance the number of commercial fruit (>70 mm) if applied between 13 and 20 mm king fruitlet diameter.

**Table 5:**

| The effect of lecithin, polysorbate 20, polysorbate 60 and polysorbate 80 on final fruit retention and fruit size at harvest, Golden Delicious 2015 | | |
|---|---|---|
| Treatment | Fruit number per tree at harvest | Number of commercial fruit (>70 mm) |
| Control (non-thinned) | 187 | 58 |
| Lecithin - 2x early | 166 | 58 |
| Polysorbate 20 - 2x early | 145 | 81 |
| Polysorbate 60 - 2x early | 131 | 82 |
| Polysorbate 80 - 2x early | 163 | 108 |
| Lecithin - 2x late | 176 | 74 |
| Polysorbate 20 - 2x late | 131 | 89 |
| Polysorbate 60 - 2x late | 154 | 75 |
| Polysorbate 80 - 2x late | 164 | 79 |
| Lecithin + polysorbate 60 - 2x late | 139 | 78 |

## Claims

1. A method of late fruitlet thinning of apple trees **characterized in that** a composition comprising lecithin or lecithin and one or several polysorbates or one or several polysorbates as active ingredients in a water solution, wherein polysorbates are selected from polysorbate 20, polysorbate 60 and polysorbate 80 is applied on the apple trees at the time of king fruitlets diameter from 6 to 30 mm.

2. The method according to claim 1, **characterized in that** the amount of each individual active ingredient in the water solution is from 0.2% to 5% by weight or volume of the total solution.

3. The method according to claims 1 to 2, **characterized in that** the amount of all active ingredients in the water solution is from 0.2 % to 15 % by weight or volume of the total solution.

4. The method according to claims 1 to 3, **characterized in that** the composition comprises additives, other thinning agents, growth regulators, foliar fertilizers and other agrochemical active substances.

5. The method according to claims 1 to 4, **characterized in that** the composition is applied to the apple trees in one or multiple applications by spraying.

## Patentansprüche

1. Verfahren zur späten Fruchtausdünnung von Apfelbäumen, **dadurch gekennzeichnet, dass** eine Zusammensetzung, die als Wirkstoffe Lecithin oder Lecithin sowie ein oder mehrere Polysorbate, oder ein oder mehrere Polysorbate in einer Wasserlösung umfasst, wobei Polysorbate aus Polysorbat 20, Polysorbat 60 und Polysorbat 80 gewählt werden und zum Zeitpunkt, an dem die Früchte einen Durchmesser von 6 bis 30 mm haben, auf die Apfelbäume aufgebracht wird.

2. Verfahren nach Anspruch 1, **dadurch gekennzeichnet, dass** die Menge jedes einzelnen Wirkstoffs in der Wasserlösung 0,2 bis 5 Gew.-% oder Vol.-% der Gesamtlösung beträgt.

3. Verfahren nach den Ansprüchen 1 bis 2, **dadurch gekennzeichnet, dass** die Menge aller Wirkstoffe in der Wasserlösung 0,2 bis 15 Gew.-% oder Vol.-% der Gesamtlösung beträgt.

4. Verfahren nach den Ansprüchen 1 bis 3, **dadurch gekennzeichnet, dass** die Zusammensetzung Additive, weitere Verdünnungsmittel, Wachstumsregulatoren, Blattdüngemittel und andere agrochemische Wirkstoffe enthält.

5. Verfahren nach den Ansprüchen 1 bis 4, **dadurch gekennzeichnet, dass** die Zusammensetzung in einer oder mehreren Anwendungen durch Sprühen auf die Apfelbäume aufgebracht wird.

## Revendications

1. Procédé d'éclaircissage de jeunes fruits de pommiers **caractérisé en ce qu'**une composition comprenant de la lécithine ou de la lécithine et un ou plusieurs polysorbates ou un ou plusieurs polysorbates en tant que principes actifs dans une solution aqueuse, les polysorbates étant choisis parmi le polysorbate 20, le polysorbate 60 et le polysorbate 80, est appliquée sur les pommiers au moment où le diamètre des fruits centraux mesure de 6 à 30 mm.

2. Procédé selon la revendication 1, **caractérisé en ce que** la quantité de chaque principe actif dans la solution aqueuse est de 0,2 % à 5 % en poids ou en volume de la solution totale.

3. Procédé selon les revendications 1 à 2, **caractérisé en ce que** la quantité de tous les ingrédients actifs dans la solution aqueuse est de 0,2 % à 15 % en poids ou en volume de la solution totale.

4. Procédé selon les revendications 1 à 3, **caractérisé en ce que** la composition comprend des additifs, d'autres produits d'éclaircissage, des régulateurs de croissance, des engrais foliaires et d'autres substances actives agrochimiques.

5. Procédé selon les revendications 1 à 4, **caractérisé en ce que** la composition est appliquée sur pommiers par pulvérisation en une ou plusieurs applications.
